# EUROPEAN PATENT APPLICATION

(11) **EP 2 233 450 A1**
(43) Date of publication of application: **29.09.2010**
(21) Application number: 09156515.0
(22) Date of filing: 27.03.2009
(51) Int. Cl.: C04B 37/00, C23C 28/02

(54) **Multilayer thermal protection system and its use**

(71) Applicant: Alstom Technology Ltd, 5400 Baden (CH)
(72) Inventor: Bossmann, Hans-Peter, 79787 Lauchringen (DE); Bachegowda, Sharath, 5408 Ennetbaden (CH); Esquerre, Matthieu, 5432 Neuenhof (CH); Iten, Rico, 5400 Baden (DE)

(57) **Abstract**

A multilayer thermal protection system is described, in which a first ceramic layer (3) is attached via a bond coat layer (4) on a metallic substrate (5), wherein on the first ceramic layer (3) there is provided at least one second ceramic layer (1) attached to the first ceramic layer (3) via a ceramic adhesive layer (2), wherein the first ceramic layer (3) is a low-temperature ceramic layer and the second ceramic layer (1) is a high temperature ceramic layer.

## Description

### TECHNICAL FIELD

The present invention relates to the field of thermal barrier coatings (TBC) as used in particular for the protection of components exposed to the hot gas path of machines such as gas turbines.

### PRIOR ART

Gas turbines (GT) are increasingly requested to have higher efficiencies and this is normally achieved primarily through increase of the firing temperature up to 1750°C at least for very short periods of time and reduced cooling effort to the GT components. These components in addition to handling the high temperatures should also be able to cope with harsh GT environments for extended periods of time (operating hours > 24000h).
There are the following main approaches to produce thermal barrier coating systems that are capable of handling high temperatures and harsh environments:
1. Base Metal/Bondcoat (BC)/ Thermal Barrier Coating (TBC)
2. Base Metal/BC/TBC/ Environmental Barrier Coating (EBC)
3. Ceramic matrix composites (CMC)
   a) Oxide CMC + High Temperature Insulation
   b) Non-Oxide CMC + EBC
4. Free standing hybrid ceramic structures such as e.g. disclosed in US 2003/0207155

The temperature capability Tₘₐₓ of materials is defined specifically for industrial gas turbine application as the maximum possible surface temperature for 24000h in gas turbine combustion gas environment without significant loss of functionality (e.g. reduced thermal barrier effect due to spallation, strain tolerance due sintering, degradation due to environmental attack of combustion gas constituents, thermal phase stability).

Tₘₐₓ of state of the art TBC systems with about 7 wt% Yttria Stabilized Zirconia (7YSZ) have been determined to be <1150°C because of sintering behaviour which results in higher stiffness and lower strain tolerance for thermal cycling (start-stop-cycle of the turbine). Also the thermal phase stability of YSZ is limited to about 1100°C for long-term operation. Tₘₐₓ for the environmental attack due to Ca-compound form the combustion gas was determined to be around 1200°C.

As all these degradation processes are thermally activated (exponential growth of reaction rates) Tₘₐₓ is defined as that temperature where significant material degradation compared to virgin material occurs.

The quantification of degradation can be done by state of the art test and evaluation tools, e.g. X-ray diffraction, Knoop hardness, SEM, dilatometer, etc.

The limitations of this prior art coating systems can essentially be summarised as follows:
1. Current BC/TBC systems that are based on MCrAlY / 7 wt% Yttria Stabilized Zirconia (7YSZ) have reached their limits in terms of both temperature capability and their ability to withstand severe GT environments. The upper temperatures of these systems are reaching their limit and are prone to attack by contaminants in the fuel such as Vanadium and environmental contaminants such as Calcium Magnesium Alumino Silicate (CMAS).
2. TBC/EBC systems comprised of dual/graded layers of ceramics that are functionally separated, wherein the TBC provides the temperature protection and the EBC is intended to protect the TBC from the harsh environments of the GT.
   These systems are still based on the conventional BC/TBC design with an additional thin coating forming the EBC layer.
3a. Oxide based CMCs are limited in terms of temperature capability and need to be protected with a high temperature insulating layer. The oxide based CMCs have a temperature capability of 1100°C, with the application of thermal insulating layers, Mullite (Alumino Silicate) based systems are known which are highly porous and capable of handling temperatures up to 1400°C for long term applications. They do not require an additional EBC since the CMC materials is resistant against environmental attack. Tₘₐₓ seems to be limited to <1200°C for such systems due to low strain tolerance caused by sintering of fibre and matrix, resulting in insufficient thermal cycling behavior for long-term operation.
3b. Non-Oxide based CMC are capable of handling the highest temperatures (1600°C). However they are susceptible to attack by GT environment (specifically recession by the action of water vapor) and need to be protected with an EBC. These systems can withstand the severe GT atmospheres when protected by an EBC layer however, after more than one decade of developments, the corrosion problem is still not fully solved, since any crack in the EBC can lead to the complete failure of the component.

### SUMMARY OF THE INVENTION

The object of the present invention is thus to provide a thermal protection system that is capable of handling high temperatures and harsh environments as will be required of future gas turbines.

This is achieved by typically a four-layer metal/ceramic hybrid system on a metallic substrate (component, e.g. nickel-based superalloy). The system among other aspects relies on e.g. utilizing the current state of the art metal/BC/TBC systems and to augment their temperature capability by bonding a high temperature capable ceramic material able to withstand harsh GT environments to the metal/BC/TBC system.

Specifically, the present invention relates to a multilayer thermal protection system, in which a first ceramic layer (TBC layer) is attached via a bond coat layer on a metallic substrate. On the first ceramic layer there is provided at least one second ceramic layer attached to the first ceramic layer via a ceramic adhesive layer. The first ceramic layer is normally applied by plasma spraying (or another thermal spraying method) and the second ceramic layer comprises monolithic ceramic elements adhesively attached by the ceramic adhesive layer to the first ceramic layer.

Monolithic ceramic elements are to be understood as pre-fabricated elements which can be in the form of tiles, columnar structures, block structures or the like, what is important is that they are pre-manufactured and already sintered prior to the application to the substrate. These monolithic ceramic elements are typically sintered at temperatures of around 1600°C and therefore do not undergo a further sintering process anymore when mounted in the machine.

Typically, the first plasma sprayed ceramic layer has a thickness in the range of 0.1 to 2 mm.

Typically the second ceramic layer, i.e. the monolithic ceramic elements have a thickness (measured perpendicular to the surface plane of the substrate) in the range of 2 to 35mm, preferably in the range of 5-10 mm.

According to one preferred embodiment, the first ceramic layer is a low-temperature ceramic layer and the second ceramic layer is a high temperature ceramic layer.

This means that the first ceramic layer normally has a temperature capability Tₘₐₓ up to and including a temperature of 1150°C, preferably up to and including a temperature of 1100°C, as for example the case for conventional TBC layer as outlined above.

The second ceramic layer, i.e. the monolithic ceramic elements, Preferentially has a higher temperature capability Tₘₐₓ than the first ceramic layer. This means that preferably the temperature capability Tₘₐₓ of the second ceramic layer is at least 100°C, preferably at least 200°C or even 300°C, larger than the temperature capability Tₘₐₓ of the first ceramic layer.

Normally the second ceramic layer has a temperature capability Tₘₐₓ of at least 1200°C, more preferably of at least 1500°C, even more preferably in the range of 1200-1750°C. Tₘₐₓ of the second layer is defined by the sintering, phase stability and environmental stability.

As outlined above, the temperature capability Tₘₐₓ of materials is defined specifically for industrial gas turbine applications as the maximum possible surface temperature for 24000h in gas turbine combustion gas environment without significant loss of functionality such as reduced thermal barrier effect due to spallation, strain tolerance due sintering, degradation due to environmental attack of combustion gas constituents, thermal phase stability.

The quantification of degradation for the determination of the temperature capability can be done by state of the art test and evaluation tools, e.g. X-ray diffraction, Knoop hardness, SEM, dilatometer, etc. as concerns the measurement of these quantities, reference is made to the following literature: ASTM C1326 - 08e1 Standard Test Method for Knoop Indentation Hardness of Advanced Ceramics; ASTM E831 Standard Test Method for Linear Thermal Expansion of Solid Materials by Thermomechanical Analysis; G.Witz, V. Shklover, W. Steurer, S. Bachegowda, H.-P. Bossmann: MONITORING THE PHASE EVOLUTION OF YTTRIA STABILIZED ZIRCONIA IN THERMAL BARRIER COATINGS USING THE RIETVELD METHOD, Journal of the American Ceramic Society, Volume 90 Issue 9, Pages 2935 - 2940 (2007).

Using these quantities the temperature capability can be determined as described in the above mentioned publication from Witz. A time-temperature-relation was established for the temperature range 1100-1400°C for exposure times 1-1400h. The measured kinetics of phase evolution (or phase stability) was combined with the temperature dependence using the Arrhenius equation for thermally activated processes. Tₘₐₓ for a certain time of exposure can be extrapolated from these data. This approach is applicable also for sintering and environmental stability. For this purpose the individual layers can be tested and investigated as stand-alone layers.

The nature of the system ensures that the thermal mismatch between the adjacent layers is minimized to reduce internal stresses at the interfaces of the various layers.

Metal/BC/TBC systems have a limited temperature capability, by bonding an independent ceramic part that is capable handling higher temperature and having higher environmental resistance to hot gas exposed surface of the Metal/BC/TBC system, the system can be made to operate at temperatures above 1400°C.

The top ceramic part can be a single, multilayer or graded system prepared by any state of the art processes. This independent part is bonded to the metal/BC/TBC system. The preferred bonding method being adhesive, achieved by means of ceramic cement pastes.

According to a preferred embodiment, the second ceramic layer has a thickness in the range of 2-20 mm, preferably in the range of 5-10 mm. The second ceramic layer (but also the first ceramic layer) can be a single layer, multilayer or graded layer system.

According to a further preferred embodiment, the second ceramic layer so the monolithic ceramic elements are alpha-alumina based and/or magnesia based, wherein preferably elements of the second ceramic layer essentially consist of alpha alumina and/or magnesia. They can be produced using methods according to the state-of-the-art, where starting from this material a green compact is produced which is subsequently sintered, normally at temperatures around 1600°C. These prefabricated elements are subsequently joined to the first (TBC) layer using the adhesive, braze etc. on a TBC coated metallic substrate.

Multilayer thermal protection system can be **characterised in that** the porosity of the first layer is in the range of 5-25%.

Preferentially, second ceramic layer is a multilayer structure with at least one dense surface exposed layer with a porosity of below 30%, preferably in the range of 0-25% or 5-10%, and with at least one porous interface layer (can be of the same constitution or of a different constitution) with a porosity of above 30%, preferably in the range of 50-90%, at the interface with the first ceramic layer.

Yet another preferred embodiment is **characterised in that** the second ceramic layer comprises at least one surface exposed layer and at least one underlying additional layer, and the surface exposed layer is structured as a two-dimensional array of tiles separated by gaps.

The gaps between the tiles can be slots with parallel sidewalls perpendicular to or inclined with respect to the surface plane of the substrate. In this case the sidewalls of the tiles are planes perpendicular to the surface plane or inclined with respect to the surface plane, respectively.

In the alternative is also possible to have sidewalls of the tiles which have an interlocking shape, such as key and slot joints or tongue and groove joints.

The tiles structure of the most surface exposed layer allows to reduce thermal expansion problems and allows to keep local damage due to foreign object impact (FOD) to a minimum. The tiles can be of rectangular, quadratic, rhombic or hexagonal shape. Preferably, in particular in case of a regular hexagonal shape (honeycomb) the lateral extension of a tile in both dimensions is in the range of 2-35 mm, preferably in the range of 10-20 mm.

The ceramic adhesive layer can be a refractory cement paste layer. It can be calcium aluminate based, or can even essentially consist of calcium aluminate.

According to a preferred embodiment, the bond coat is composed of MCrAlY, where M = Co, Ni or Co/Ni, and/or of PtAl.

As mentioned above, typically the first ceramic layer is a conventional TBC layer, and can for example be based on or consist of 7YSZ. (ZrO₂, stabilised with 7 wt.-% Y₂O₃).

In order to ensure mechanical bonding, grooves, ribs, anchors and roughening can be utilized. this means, that, according to a preferred embodiment, at at least one of the interfaces to the ceramic adhesive layer mechanical bonding aids are provided, preferably in the form of grooves, ribs, anchors, and/or surface texture (roughening) provided in the first ceramic layer and/or the second ceramic layer.

Furthermore the present invention relates to the use of a thermal barrier coating layer system as outlined above for coating at least a part of a component exposed to temperatures above 1400°C.

More specifically, it relates to the use of a thermal barrier coating layer system as outlined above for coating at least partially components exposed to the hot gas path in thermal engines, in particular in gas turbines, preferably exposed to hot gases with temperatures above 1400°C.

Such a thermal barrier coating layer system can for example be used for selectively coating only the most temperature exposed parts of gas turbine components exposed to the hot gas path, while surrounding parts are coated with a thermal barrier coating system consisting of a thermal barrier coating layer attached to the metallic substrate by a bond coat layer.

Further embodiments of the present invention are outlined in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows a schematic cut through a barrier coating according to the invention perpendicular to the plane of the component with the barrier coating according to a first embodiment;
Fig. 2 shows a schematic cut through a barrier coating according to the invention perpendicular to the plane of the component with the barrier coating according to a second embodiment;
Fig. 3 a) shows a schematic representation of a top view onto a honeycomb tile structure of the barrier coating, b) shows a schematic representation of a cut perpendicular to the plane of the substrate with planar surfaces of the sidewalls of the tiles and c) shows a schematic representation of a cut perpendicular to the plane of the substrate with interlocking surfaces of the sidewalls of the tiles;
Fig. 4 shows an open cell alpha-alumina joined to 7YSZ prior to exposure to thermal cycling (a) and thermal cycling of open cell alpha-alumina joined to 7YSZ during cooling down cycle; and
Fig. 5 shows a 20vol.% porous alpha-alumina joined to 7YSZ.

### DESCRIPTION OF PREFERRED EMBODIMENTS

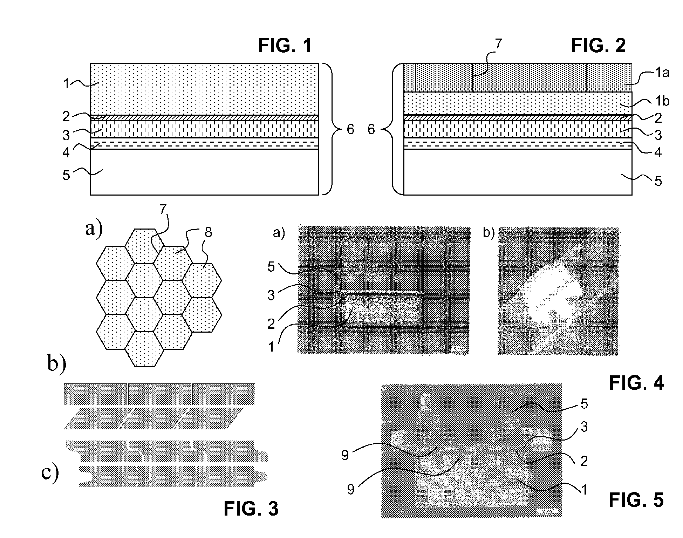

Referring to the drawings, which are for the purpose of illustrating the present preferred embodiments of the invention and not for the purpose of limiting the same, figure 1 shows a hybrid metal/ceramic structure 6 composed of at least four layers for use in high temperature environments such as GT's. The structure is made of load bearing superalloy material 5, an oxidation/corrosion resistant bondcoat 4, a low temperature ceramic layer 3 resistant up to temperatures of 1150°C (may also be a multilayer structure), a ceramic adhesive layer 2 and high temperature ceramic part or layer 1, with temperature capability up to 1750°C.
The metallic substrate 5 is a Ni-based superalloy, the bondcoat layer 4 is composed either of a MCrAIY or PtAl system, the low temperature ceramic layer 3 or TBC layer is based on or consists of 7YSZ and the adhesive layer 2 is a refractory cement paste normally a calcium aluminate based. The high temperature resistant ceramic part 1 can be a single, multilayer or graded system prepared by processes known in the art such as vapour deposition, sol gel processes, powder deposition, direct a position, plasma spray processes and the like . The high temperature resistant ceramic layer 1 has a thickness of at least 2 mm and up to 20 mm, preferred thickness is between 5 and 10 mm.
The ceramic part 1 is preferably alpha alumina based and/or magnesia based. The ceramic part 1 can be gas tight (closed porosity in the range of 0-10%), or have open plus closed porosity ranging from 15%-90%.
The layered system can, as illustrated in figure 2, have a porous layer 1b at the interface with the TBC, ensuring strain tolerance and have a dense layer 1a at the surface exposed to the combustion gases to provide erosion resistance.
The dense outer layer 1a can be, as illustrated in figure 3a, giving a honeycomb tile structure in a top view, composed of individual tiles separated by a small gaps or intentional cracks 7 designed so as to ensure reduced matter loss in case of foreign object damage and to reduce the strains in the layer due to thermal expansion mismatch linked to the temperature gradient and the different thermal expansion coefficient in the system. The typical tile size being 25mm x 25mm, so as to minimize the risk of foreign object damage.
As can be seen from figure 3b in the top part thereof, the sidewalls of the tiles can be straight walls perpendicular to the surface plane of the substrate. In the bottom representation of figure 3b modified structure is shown in which the sidewalls are inclined with respect to the surface plane of the substrate. This inclination, in particular if designed such that hot gases flowing across the surface cannot easily enter the slots, can be advantageous as the hot air cannot easily penetrate through the slots. As can be see from figure 3c, showing to different interlocking sidewalls structures for the tiles, it is possible to have like labyrinth groove structures which on the one hand can increase mechanical stability and on the other hand can further prevents penetration of hot air to more hot air sensitive layers buried below the tiles.

### Experimental part:

A first series of experiments was performed using a high grade calcium aluminate cement to join 7YSZ coating to an open-cell alpha-alumina monolithic ceramic with the porosity of about 80 percent prepared by a sol-gel process.

### The sample was produced as follows:

On a substrate of nickel superalloy a NiCoCrAlY bondcoat (about 0.3mm thickness) and a 7YSZ coating layer (about 0.8mm thickness) was produced by plasma spray processes. A thin layer (about 0.1mm) of the refractory cement was applied manually to the surface of this TBC layer and on an open cell alpha alumina monolithic ceramic (about 20mm thickness). Subsequently both pieces were joined putting the cement layers together. After curing 24h in humid environment, assembly was heat treated with the following steps: 60°C/2h, 120°C/2h, 300°C/2h, 1000°C/20h. The heating and cooling rate for the last step was about 50K/h.

The corresponding structure is shown in Figure 4a. Then, the assembly was thermal cycled (23h dwell time at 1000°C and 1h dwell time at room temperature) for 2 weeks and survived as shown in Figure 4b during the cooling down cycle.
Subsequently a second series of experiments was conducted using the same substrate/Bondcoat/TBC system and the same refractory cement but as second layer 1 an alpha-alumina monolithic part with 20% porosity and 12mm thickness was used. Grooves 9 were made on the mating surfaces of the TBC 3 and the alpha-alumina 1 in order to improve the mechanical interlocking of the cement, as shown in figure 5. The assembly was thermal cycled for short-term duration as in the first series of experiments at elevated temperature.
The sample was produced similarly as in case of the above first series of experiments.

### LIST OF REFERENCE SIGNS

- 1: second ceramic layer, high temperature ceramic top layer
- 1a: dense surface exposed layer part of 1
- 1b: porous interface layer of 1
- 2: ceramic adhesive layer
- 3: first ceramic layer, low-temperature ceramic layer
- 4: bond coat layer
- 5: metallic substrate, superalloy
- 6: hybrid metal/ceramic structure
- 7: gap between tiles
- 8: honeycomb tiles
- 9: slots in 1 and/or 3

## Claims

1. Multilayer thermal protection system, in which a first ceramic layer (3) is attached via a bond coat layer (4) on a metallic substrate (5), wherein on the first ceramic layer (3) there is provided at least one second ceramic layer (1) attached to the first ceramic layer (3) via a ceramic adhesive layer (2), wherein the first ceramic layer (3) is applied by plasma spraying and the second ceramic layer (1) comprises monolithic ceramic elements adhesively attached to the first ceramic layer (3).

2. Multilayer thermal protection system according to claim 1, wherein the first ceramic layer (3) has a thickness in the range of 0.1 to 2 mm, and wherein the second ceramic layer (1) has a thickness in the range of 2 to 35mm, preferably in the range of 5-10 mm.

3. Multilayer thermal protection system according to claim 1 or 2, wherein the first ceramic layer (3) has a temperature capability (Tₘₐₓ) up to and including a temperature of 1150°C, preferably up to and including a temperature of 1100°C, and wherein the second ceramic layer (1) has a higher temperature capability (Tₘₐₓ) than the first ceramic layer (3), wherein preferably the temperature capability (Tₘₐₓ) of the second ceramic layer (1) is at least 100°C, preferably at least 200°C, larger than the temperature capability (Tₘₐₓ) of the first ceramic layer (3), wherein preferably the second ceramic layer (1) has a temperature capability (Tₘₐₓ) of at least 1200°C, more preferably of at least 1500°C, even more preferably in the range of 1200-1750°C.

4. Multilayer thermal protection system according to claim 3, wherein the second ceramic layer (1) is a single layer, multilayer or graded layer system.

5. Multilayer thermal protection system according to any of claims 3 or 4, wherein the second ceramic layer (1) is alpha-alumina based and/or magnesia based, wherein preferably the second ceramic layer (1) essentially consists of alpha alumina and/or magnesia.

6. Multilayer thermal protection system according to any of claims 3-5, wherein the second ceramic layer (1) comprises at least one surface exposed layer (1a) and at least one underlying additional layer (1b), and wherein the surface exposed layer (1a) is structured as a two-dimensional array of tiles (8) separated by gaps (7), wherein preferably the tiles are of rectangular, quadratic, rhombic or hexagonal shape, and wherein preferably the lateral extension of a tile in both dimensions is in the range of 15-35 mm, preferably in the range of 20-30 mm, wherein further preferably the gaps (7) between the tiles (8) are slots with parallel sidewalls perpendicular to or inclined with respect to the surface plane of the substrate, or are slots with interlocking shape.

7. Multilayer thermal protection system according to any of claims 3-6, wherein the ceramic adhesive layer (2) is a refractory cement paste layer, preferably calcium aluminate based, more preferably essentially consisting of calcium aluminate.

8. Multilayer thermal protection system according to any of claims 3-7, wherein the metallic substrate (5) is a nickel-based superalloy.

9. Multilayer thermal protection system according to any of claims 3-8, wherein the bond coat is composed of MCrAlY, where M = Co, Ni or Co/Ni, and/or is composed of PtAl.

10. Multilayer thermal protection system according to any of claims 3-8, wherein the composition of the bond coat is given as 25Cr 5.5Al 2.5Si 1Ta 0.6Y with the remainder Ni, or as 12Co 20Cr 11A1 2.7S1 1Ta 0.6Y with the remainder Ni.

11. Multilayer thermal protection system according to any of claims 3-10, wherein the first ceramic layer (3) is based on or consists of 7YSZ.

12. Multilayer thermal protection system according to any of claims 3-11, wherein at at least one interface to the ceramic adhesive layer (2) mechanical bonding aids are provided, preferably in the form of grooves, ribs, anchors, and/or surface texture provided in the bondcoat (4) and/or the first ceramic layer (3) and/or the adhesive layer (4) and/or the second ceramic layer (1).

13. Use of a multilayer thermal protection system according to any of the preceding claims for coating at least a part of a component exposed to temperatures above 1400°C.

14. Use of a multilayer thermal protection system according to any of the preceding claims 1-13 for coating at least partially components exposed to the hot gas path in thermal engines, in particular in gas turbines, preferably exposed to hot gases with temperatures above 1400°C.

15. Use of a thermal barrier coating layer system according to any of the preceding claims 1-12 or for selectively coating only the most temperature exposed parts of gas turbine components exposed to the hot gas path, while surrounding parts are coated with a thermal barrier coating system consisting of a thermal barrier coating layer attached to the metallic substrate (5) by a bond coat layer (4).
